(19) Europäisches Patentamt
European Patent Office
Office européen des brevets

(11) Publication number: **0 139 893**
**A1**

(12) # EUROPEAN PATENT APPLICATION

(21) Application number: 84108952.7

(22) Date of filing: 27.07.84

(51) Int. Cl.[4]: C 08 L 77/00
C 08 K 13/02, H 01 B 3/30

(30) Priority: 01.08.83 US 519277
30.03.84 US 595197

(43) Date of publication of application:
08.05.85 *Bulletin* 85/19

(84) Designated Contracting States:
BE DE FR GB IT NL

(71) Applicant: OCCIDENTAL CHEMICAL CORPORATION
P.O. Box 189
Niagara Falls New York 14302(US)

(72) Inventor: Ilardo, Charles S.
151 Lorelee Drive
Tonawanda New York(US)

(72) Inventor: Duffy, James J.
229 Curtis Parkway
Buffalo New York(US)

(74) Representative: Vossius Vossius Tauchner Heunemann Rauh
Siebertstrasse 4 P.O. Box 86 07 67
D-8000 München 86(DE)

(54) **Flame retardant polyamide compositions.**

(57) Polyamide compositions having improved flame retardant properties and arc tracking resistance comprises, in percent by weight, about 35 to about 76 percent polyamide; about 6 to about 10 percent zinc borate; about 10 to about 15 percent melamine cyanurate; 0 to about 35 percent glass fiber; about 0 to about 3 percent antimony trioxide; and about 8 to about 15 percent of a halogenated compound selected from the group consisting of brominated polystyrenes, brominated diphenyl ethers, bis(hexachlorocyclopentadieno)cyclooctane.

EP 0 139 893 A1

Croydon Printing Company Ltd.

Our Ref.: T 175 EP
Case: 4724/4749

0139893

OCCIDENTAL CHEMICAL CORPORATION
NIAGARA FALLS, N.Y., U.S.A.

# FLAME RETARDANT POLYAMIDE COMPOSITIONS

This invention relates to flame retardant polyamide compositions having improved comparative arc track. (comparative tracking index; CTI).

Flame retardant polyamide molding compositions are used extensively for the manufacture of articles and parts for electrical applications. For such purposes it is often required that the polyamide composition exhibit a high arc tracking resistance (CTI) as well as flame retardant properties.

U.S. Patent 4,247,450 discloses polyamide compositions having both fire resistance and arcing resistance, comprising a polyamide, 5 to 25 percent of a flameproofing agent, 0.2 to 20 percent cadmium oxide and, optionally, an additional inorganic compound such as zinc borate. The flame proofing agent may be a brominated compound such as decabromodiphenyl oxide, or a chlorinated compound such as the reaction product of two moles of hexachlorocyclopentadiene and one mole of cyclooctadiene.

U.S. Patent 4,105,621 discloses flame retardant polyamide compositions having arc tracking resistance comprising 30-74.95 percent polyamide, 15-55 percent glass fiber, 5-30 percent of a halogenated flame retardant, 5-30 percent zinc borate, 0.05 to 15 percent of an oxide such as antimony oxide or zinc oxide.

U.S. Patent 4,360,616 discloses flame retardant polyamide compositions having arc tracking resistance, comprising (a) 40-65 weight percent polyamide, (b) 16-35 weight percent melamine, melam, melamine cyanurate, or a melamine derivative, (c) 1-7 weight percent of a composition selected from the group consisting of brominated polystyrene and a chlorinated compound prepared from condensation of two moles of perchlorocyclopentadiene and one mole of 1,5-cyclooctadiene; (d) 1-4.9 weight percent of zinc borate or zinc oxide; and (e) 5-30 weight percent glass fibers.

In accordance with this invention there are provided polyamide compositions having improved flame retardant properties and arc tracking resistance, comprising in percent by weight; (a) about 35 to about 76 percent polyamide; (b) about 6 to about 10 percent zinc borate; (c) about 10 to about 15 percent melamine cyanurate; (d) about 0 to about 35 percent glass fiber; (e) about 0 to about 3 percent antimony trioxide; and (f) about 8 to about 15 percent of a halogenated organic compound selected from the group consisting of brominated polystyrene and brominated diphenyl ethers, and a chlorinated compound of the formula.

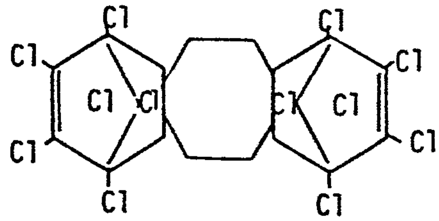

(I)

The chlorinated compound of formula (I) may be prepared by condensing two moles of hexachlorocyclopentadiene with one mole of 1,5-cyclooctadiene in xylene at a temperature below 200 °C. The compound melts with decomposition at about 350°C and has a vapor pressure of 0.8 Pascal at 197°C. For convenience, this compound will be referred to herein as bis(hexachlorocyclopentadieno)cyclooctane.

The preferred compositions of this invention are glass-fiber-reinforced polyamide compositions, comprising in percent by weight: (a) 35 to 55 percent polyamide; (b) 6 to 10 percent zinc borate; (c) 10 to 15 percent melamine cyanurate; (d) 15 to 35 percent glass fiber; (e) 0 to 3 percent antimony trioxide and (f) 8 to 15 percent of the halogenated organic component, based on a total of 100 percent for components (a) through (f).

The polyamides suitable for use in the compositions of this invention are those polymers commonly known by the generic term, nylon, characterized by the presence of recurring amide groups as an integral part of the polymer chain. Included are the various nylon homopolymers, copolymers, and the like as well as blends thereof. Typical of the nylon compositions are polycaprolactam (nylon 6); the polyamides derived by condensation of a dicarboxylic acid with a diamine, such as polyhexamethylene adipamide (nylon 66); polyhexamethylene sebacamide (nylon 610), and polyhexamethylene dodecanediamide (nylon 612), as well as copolymers and blends and the like such as nylon 66/6; nylon 66/610; nylon 66/612; nylon 66/610/6; nylon 66/612/6 and the like.

A number of brominated organic compounds are known to be useful as flame retardant for polymeric materials. Several such compounds are commercially available for use as flame retardant additives. However, it has been found that of the various known brominated organic flame retardants the brominated polystyrenes and brominated diphenyl ethers are particularly well-suited for use in accordance with this invention in the preparation of polyamide compositions having improved comparative tracking index.

The brominated polystyrenes employed in the compositions of this invention are typically of low to medium molecular weight and have at least about 40 percent and preferably about 60 to about 75 percent by weight bromine. The brominated polystyrene should have a molecular weight of at least about 5,000 and may have a molecular weight as high as about 200,000 or higher. A preferred brominated organic flame retardant for this purpose is a brominated polystyrene having an average of about 3 atoms of bromine per styrene monomeric unit.

The brominated diphenyl ethers which may be employed in the compositions of this invention include diphenyl ethers having, for example 2 to 10 bromine atoms and, most preferably, 6 to 10 bromine atoms per molecule and may be characterized in the preferred form by the formula:

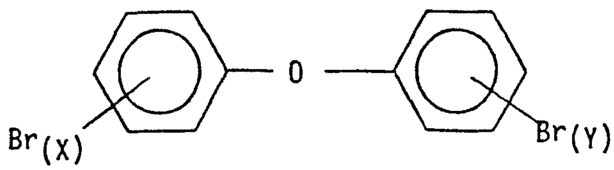

where X plus Y equal 6-10.

Typical of the preferred brominated diphenyl ethers are the commercially available octabromodiphenyl ether (average of eight bromine atoms per molecule) and decabromodiphenyl ether flame retardant additives.

The zinc borate employed should be in a form that is stable under processing conditions, that is, with minimum evolution of volatile material at molding temperatures. The preferred form of zinc borate is the hydrate represented by the formula $2ZnO.3B_3O_3,xH_2$ where x is between 3.3 and 3.7. This material is substantially stable at temperatures below about 300°C. The higher hydrates such as $2ZnO.3B_2O_3.7H_2O$ and $2ZnO.3B_2O_3.9H_2$ lose water below the processing temperature of most polyamides and are recommended for use primarily with the low melting polyamides. Anhydrous zinc borate may be employed but is not generally preferred. In the molding compositions of this invention, the zinc borate is present in an amount of about 6 to 10 percent by weight, based on the total composition.

Melamine cyanurate is characterized by the empirical formula $C_6H_9N_9O_3$ and a melting or decomposition point about 350°C. It is prepared by the reaction of melamine with cyanuric acid. Melamine cyanurate is employed in the molding compositions of this invention in amounts of about 10 to 15 percent by weight based on the total composition.

In the preparation of fiber-reinforced polyamide molding compositions of the invention, there may be employed the glass fibers commercially available for polymer molding resin reinforcement. The glass fibers are preferably employed in an amount of about 15 to 35, and most preferably 20 to 30 percent by weight.

When the halogenated organic flame retardant employed is bis(hexachlorocyclopentadieno)cyclooctane, antimony trioxide may be employed in amounts of up to about 3 percent. For molding compositions utilizing nylon 6 or a blend containing nylon 6, it is preferred to incorporate about 1 to about 3 percent antimony oxide to provide greater flame retardancy. For compositions utilizing other nylons, such as nylon 66, the inclusion of antimony trioxide is not preferred. For compositions wherein the halogenated organic flame retardant is brominated polystyrene or a brominated diphenyl ether, antimony oxide may be employed but is not preferred.

The nylon and flame retardant components can be compounded to form an intimate mixture, suitable for molding, by various known methods. The components may be ground or pulverized and the powders mixed in a conventional fashion to form a blend suitable for molding techniques. Alternatively, the fire retardant components may be added and mixed with the molten polymer blend. The blend may then be molded, extruded, or otherwise formed into useful articles or shapes, and is particularly adaptable for injection molding techniques. Furthermore, various

other additives may be incorporated into the blend such as plasticizers, lubricants, fillers, dyes, pigments, mold release agents, anti-static agents, and the like.

The following specific examples are provided to further illustrate this invention and the manner in which it may be carried out. It will be understood, however, that the specific details given in the examples have been chosen for purpose of illustration and are not to be construed as a limitation on the invention. In the examples, unless otherwise indicated, all parts and percentages are by weight and all temperatures are in degrees Celsius.

Examples 1-8

A series of flame retardant nylon molding compositions are prepared and injection molded in the form of 1/8 x 1/2 x 5" bars. The injection molded bars were tested to determine various physical properties.

The nylon molding compositions were prepared as follows: the nylon component was ground to pass a 1 mm sieve. The powdered flame retardant and other additives and glass fibers were blended with the nylon particles following the initial grinding. The mixtures were dried overnight at 70-105°C; and extruded at 260-270°C into a ribbon form. The extrudates were pelletized and redried before injection molding at 270-290°C. The injection molded bars were tested to determine flame retardance and various physical properties, with the results set forth in Table 1. Examples 3 and 4, utilizing brominated organic flame retardants outside of the scope of the invention, are provided for comparative purposes.

TABLE 1

| COMPOSITION/PROPERTIES | UNITS | Examples 1 | 2 | 3 | 4 | 5 | 6 | 7 |
|---|---|---|---|---|---|---|---|---|
| Nylon 66 | % | 37.5 | 37.5 | 37.5 | 37.5 | 37.5 | 37.5 | 37.5 |
| Glassfibers | % | 27.5 | 27.5 | 27.5 | 27.5 | 27.5 | 27.5 | 27.5 |
| Melamine Cyanurate | % | 15 | 15 | 15 | 15 | 15 | 15 | 15 |
| Zinc Borate | % | 8 | 8 | 8 | 8 | 8 | 8 | 8 |
| Octabromodiphenyl Ether | % | 12 | | | | | 12 | |
| Decabromodiphenyl Ether | % | | 12 | | | | | |
| Firemaster TSA* | % | | | 12 | | | | |
| BT-93 (SAYTEX)** | % | | | | 12 | | | |
| Brominated Polystyrene*** | % | | | | | 12 | | 12 |
| UL-94, 1/8" | Class | V-0 | V-0 | None | V-0 | V-0 | V-0 | V-0 |
| 1/16" | Class | V-0 | V-0 | None | V-0 | V-0 | V-0 | V-0 |
| CTI (ASTM D3638) | Volts | 450 | 350 | 225 | 250 | 400 | 425 | 425 |
| Tensile Strength, Break | MPa | 120 | 101 | 106 | 94 | 91 | 112 | 100 |
| Elongation, Break | % | 2.1 | 1.6 | 1.9 | 1.4 | 1.6 | 2.0 | 1.9 |

* A commercially available poly(dibromophenylene oxide) flame retardant additive.

** A commercially available ethylene bis-tetrabromophthalimide flame retardant additive.

***PYRO-CHEK® 68PB, a commercially available brominated polystyrene having about 68 percent by weight of aromatic bromine.

Examples 8 - 19

Another series of flame retardant nylon molding compositions were prepared following the general procedure detailed above for Examples 1-7. The compositions were injection molded in the form of 1/8 x 1/2 x 5" bars and were tested to determine flame retardance and various physical properties, with the results set forth in Table 2.

In the table, Examples 8, 9, 12, 13 and 15 are provided for comparative purposes. Example 8 typifies a prior art, glass-reinforced, flame retarded polyamide molding composition employed in the electronics industry. For electronic applications it is desirable to improve arc tracking resistance, preferably to at least about 340 and most preferably 400 volts. Example 9 demonstrates that some improvement in arc tracking (i.e., comparative tracking index or CTI) can be achieved by replacing antimony oxide with zinc borate in compositions containing nylon 66. Examples 12 and 13 illustrate compositions using melamine cyanurate in accordance with the teachings of the prior art. U.S. Patent 4,360,616 teaches that the presence of melamine or its derivatives in compositions of the type shown, aids in improving arc tracking resistance while aiding in maintaining good flame retardancy, and permits less zinc borate or oxide and less halogenated flame retardant to be present. However, in the

compositions of Examples 12 and 6, although melamine cyanurate was employed at high levels and the zinc borate or oxide and halogenated flame retardant was employed at lower levels, the molded composition failed to pass the Underwriters Laboratories Test Standard No. 94.

TABLE 2

| Composition | Units | 8 | 9 | 10 | 11 | 12 | 13 | 14 | 15 | 16 | 17 | 18 | 19 |
|---|---|---|---|---|---|---|---|---|---|---|---|---|---|
| Nylon 66 | % | 50 | 55 | 37.5 | 45 | 47 | 45 | 42.5 | - | - | - | - | - |
| Nylon 6 | % | - | - | - | - | - | - | - | 42.5 | 41 | 41 | 43 | 38 |
| Glassfibers | % | 30 | 25 | 27.5 | 27.5 | 25 | 25 | 27.5 | 27.5 | 25 | 25 | 25 | 25 |
| Melamine Cyanurate | % | - | - | 15 | 12.5 | 25 | 25 | 10 | - | 12.5 | 12.5 | 10 | 15 |
| Bis(hexachloro-cyclopentadieno)-cyclooctane | % | 16 | 16 | 12 | 9 | 3 | 4 | 12 | 24 | 12.5 | 12.5 | 10 | 10 |
| Zinc Borate | % | - | 4 | 8 | 6 | - | 1 | 8 | - | 7 | 7 | 10 | 10 |
| Zinc Oxide | % | - | - | - | - | 2 | - | - | - | - | - | - | |
| $Sb_2O_3$ | % | 4 | - | - | - | - | - | - | 6 | 2 | 2 | 2 | 2 |
| CTI | Volts | 230 | 380 | 430 | 430 | 470 | 490 | 430 | 230 | 320 | 325 | 250 | 350 |
| UL-94 1/8" | Class | V-0 | V-0 | V-0 | V-1 | Fail* | Fail | V-1 | V-0 | V-0 | V-1 | V-0 | V-0 |
| Tensile Strength | MPa | 117 | 107 | 94 | 107 | 91 | 89 | 102 | 105 | 95 | 89 | 97 | 90 |
| Elongation | % | 2.8 | 2.9 | 1.9 | 2.1 | 1.9 | 1.7 | 2.1 | 2.8 | 2.1 | 2.0 | 2.2 | 1.9 |

WHAT IS CLAIMED IS:

1. A flame retardant polyamide composition comprising

(a) about 35 to about 76 percent polyamide;

(b) about 6 to about 10 percent zinc borate;

(c) about 10 to about 15 percent melamine cyanurate;

(d) about 0 to about 35 percent glassfibers;

(e) about 0 to about 3 percent of antimony trioxide;

(f) about 8 to about 15 percent of a halogenated organic compound selected from the group consisting of brominated polystyrene; brominated diphenyl ethers; and bis(hexachloro-cyclopentadieno)cyclooctane,

wherein the percentages are based on the total weight of components (a) through (f).

2. A polyamide composition according to Claim 1 comprising 35 to 55 percent polyamide and 15 to 35 percent glass fibers.

3. A polyamide composition according to Claim 2 comprising 20 to 30 percent glass fibers.

4. A polyamide composition according to Claim 2 wherein the polyamide is nylon 66.

5. A polyamide composition according to Claim 2 wherein the polyamide is nylon 6.

6. A polyamide composition according to Claim 2 wherein the halogenated organic compound is brominated polystyrene.

7. A polyamide composition according to Claim 2 wherein the halogenated organic compound is a brominated diphenyl ether.

8. A polyamide composition according to Claim 7 wherein the brominated diphenyl ether is octabromodiphenyl ether.

9. A polyamide composition according to Claim 7 wherein the brominated diphenyl ether is decabromodiphenyl ether.

10. A polyamide composition according to Claim 4 wherein the brominated organic compound is a brominated polystyrene containing about 60 to about 75 percent by weight bromine.

11. A polyamide composition according to Claim 4 wherein the brominated organic compound is a brominated diphenyl ether having an average of about 6 to about 10 bromine atoms.

12. A polyamide composition according to Claim 2 wherein the halogenated organic compound is bis(hexachlorocyclopentadieno)-cyclooctane.

13. A polyamide composition according to Claim 1 comprising
(a) about 35 to about 55 percent nylon 6 polyamide;
(b) about 6 to about 10 percent zinc borate;
(c) about 10 to about 15 percent melamine cyanurate;
(d) about 15 to about 30 percent glass fibers;
(e) about 1 to about 3 percent antimony trioxide;
(f) about 8 to about 15 percent bis(hexachlorocyclopentadieno)-cyclooctane.

14. A polyamide composition according to Claim 1 comprising
(a) about 35 to about 55 percent nylon 66 polyamide;
(b) about 6 to about 10 percent zinc borate;
(c) about 10 to about 15 percent melamine cyanurate;
(d) about 15 to about 30 percent glass fibers;
(e) about 0 to about 1 percent antimony trioxide;
(f) about 8 to about 15 percent bis(hexachlorocyclopentadieno)-cyclooctane.

15. The use of the polyamide composition according to any of claims 1 to 14 for the production of articles and parts for electrical application exhibiting high arc tracking resistance and flame retardant properties.

European Patent Office

# EUROPEAN SEARCH REPORT

0139893

Application number

EP 84 10 8952

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 055 893 (DU PONT) * Claims * & US - A - 4 360 616 (Cat. D)<br>----- | 1-15 | C 08 L 77/00<br>C 08 K 13/02<br>H 01 B 3/30 |
| | | | TECHNICAL FIELDS SEARCHED (Int. Cl.4) |
| | | | C 08 L<br>C 08 K |

The present search report has been drawn up for all claims

| Place of search | Date of completion of the search | Examiner |
|---|---|---|
| THE HAGUE | 26-11-1984 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03.82